# EUROPEAN PATENT APPLICATION

(11) **EP 1 067 546 A1**
(43) Date of publication of application: **10.01.2001**
(21) Application number: 00113150.7
(22) Date of filing: 29.06.2000
(51) Int. Cl.: G11B 20/18

(54) **Apparatus and method for reproducing and recording information**

(30) Priority: 30.06.1999 JP 18667999
(71) Applicant: Pioneer Corporation, Meguro-ku, Tokyo (JP)
(72) Inventor: Yamanoi, Katsuaki, Pioneer Corp., Kawagoe Works, Kawagoe-shi, Saitama-ken (JP); Iijima, Takayuki, Pioneer Corp., Kawagoe Works, Kawagoe-shi, Saitama-ken (JP); Abe, Shinichiro, Pioneer Corp., Kawagoe Works, Kawagoe-shi, Saitama-ken (JP); Shumura, Yoji, Pioneer Corp., Kawagoe Works, Kawagoe-shi, Saitama-ken (JP); Matsumoto, Hiroyuki, Pioneer Corp., Kawagoe Works, Kawagoe-shi, Saitama-ken (JP); Miyagawa, Tomoko, Pioneer Corp., Kawagoe Works, Kawagoe-shi, Saitama-ken (JP); Oogami, Kazuhiko, Pioneer Corp., Kawagoe Works, Kawagoe-shi, Saitama-ken (JP)
(74) Representative: Klingseisen, Franz, Dipl.-Ing.

(57) **Abstract**

An apparatus (100) for reproducing information recorded on an information recording medium (21) provided with: an information reading device (2) for reading information recorded on the information recording medium (21), an error detecting device (10) for detecting a presence or absence of an error to indicate that the information can not be read correctly by the information reading device (2), a read control device (10) for controlling the information reading device (2) such that the information reading device (2) reads information again at a present reading position when the error is present, and for controlling the information reading device (2) such that the information reading device (2) reads information at a next reading position without reading information again at the present reading position when the error is present at each of consecutive reading positions.

## Description

### BACKGROUND OF THE INVENTION

### 1. Field of the Invention

The present invention relates to apparatus for reproducing information recorded on an optical disk such as a mini disk (hereafter called MD), and for recording information on the optical disk.

### 2. Description of the Related Art

A compact disk (hereafter called CD) has been used as an optical disk on which sound information or various data is recorded. In recent years, however, the MD has become as popular as the CD is, because the MD is smaller than the CD but has equivalent reproducing time as the CD has, and is available to be recorded information on it.

When information recorded on the MD is reproduced by an MD reproducing device, the information is read from the MD at a data transmission rate of 1.4 Mb/s, and temporarily recorded in a memory, called shock proof memory. Then the information is read from the shock proof memory at a data transmission rate of about 0.3 Mb/s, and decompressed up to five times amount of the information by ATRAC (Adaptive Transform Acoustic Coding) decoder. Further the information is converted into analog output, and reproduced.

When information is recorded on the MD by an MD recording device, the information is converted into digital output at a sampling frequency of 44.1 kHz and with 16 bits for quantization. The digital output is compressed down to one-fifth of the original information amount, and temporarily recorded in the shock proof memory at a data transmission rate of about 0.3 Mb/s. Then the data is read from the memory at a data transmission rate of 1.4 Mb/s, and recorded in the disk rotating at more than four times rate of data transmission.

In either case of reproducing or recording, the rate of reading data from the shock proof memory is faster than that of recording data in the shock proof memory. Therefore, in case of reproduction, the data is read from the shock proof memory during predetermined period, once the data storage amount in the shock proof memory has exceeded predetermined value, the data storage in the memory is suspended. Then once the data storage amount in the memory has fallen below the predetermined value, storing the data into the memory is started again. In case of recording, after the data is recorded on the MD during predetermined period, the data recording is suspended until the next data storage in the memory reaches predetermined value. Then once the next data storage reaches the value, the next data is recorded on MD.

Since there is difference between time for storing the data in the memory and time for reading the data from the memory, in case where the data read from the MD during reproduction is in error, re-reading from a head of the sector where the data is stored, i.e., a retry operation, is executed. During recording, the address or the information indicating a position for recording, is always monitored, so that once an optical pick up and a magnetic head are off the track for recording, the recording is immediately stopped. Then re-recording on a head of the cluster where the data should be recorded, i.e., a retry operation, is executed.

However, in the conventional MD reproducing device, since the retry operation is repeatedly executed every time the data is read from a sector, when the retry operation is executed to consecutive sectors, the data storage amount becomes empty. This results in interruption of reproduction for a period of time that is the equivalent of reproducing time of the data full stored in the memory.

Further, in the conventional MD recording device, since the retry operation is repeatedly executed every time the data is recorded on a cluster, when the retry operation is executed to consecutive clusters, the memory overflowed so that the data is not recorded partially, or recording is suspended.

### SUMMARY OF THE INVENTION

It is therefore an object of the present invention to provide apparatus for reproducing and recording information, and method for reproducing and recording information, which can reduce the interruption of reproduction, partial failures of recording, and interruption of recording.

The above object of the present invention can be achieved by an apparatus for reproducing information recorded on an information recording medium. The apparatus for reproducing information is provided with: an information reading device for reading information recorded on the information recording medium; an error detecting device for detecting a presence or absence of an error to indicate that the information can not be read correctly by the information reading device; and a read control device for controlling the information reading device such that the information reading device reads information again at a present reading position when the error is present, and for controlling the information reading device such that the information reading device reads information at a next reading position without reading information again at the present reading position when the error is present at each of consecutive reading positions.

According to the apparatus for reproducing information, the information reading device reads information recorded on the information recording medium. Then the error detecting device detects a presence or absence of an error to indicate that the information can not be read correctly by the information reading device. When the error is present, the read control device controls the information reading device such that the information reading device reads information again at a present reading position. However, when the error is present at each of consecutive reading positions, the read control device controls the information reading device such that the information reading device reads information at a next reading position without reading information again at the present reading position.

Therefore ineffective retry operations are eliminated, so that interruption of reproduction brought on by empty of remaining amount of a memory is reduced.

In one aspect of the apparatus for reproducing information of the present invention, a memory device memorizes information to indicate the presence or absence of the error. The read control device controls the memory device such that memory device memorizes at least information to indicate the presence or absence of the error at a former reading position.

According to this aspect, since memory device memorizes at least information to indicate the presence or absence of the error at a former reading position, the error which occurred at each of consecutive reading positions is definitely detected. Therefore the information reading device reads information at a next reading position without reading information again at the present reading position. Accordingly ineffective retry operations are eliminated, so that interruption of reproduction brought on by empty of remaining amount of a memory is reduced.

In another aspect of the apparatus for reproducing information of the present invention, a memory device memorizes information to indicate the presence or absence of the error. The read control device controls the memory device such that the memory device memorizes information to indicate the absence of the error at a former reading position when at least the error is absent at a former reading position.

According to this aspect, since the memory device memorizes information to indicate the absence of the error at a former reading position when at least the error is absent at a former reading position. When the error is absent at a former reading position, retry operations is not executed. Further, when the error is present at each of consecutive reading positions, the information reading device reads information at a next reading position without reading information again at the present reading position. Accordingly ineffective retry operations are eliminated, so that interruption of reproduction brought on by empty of remaining amount of a memory is reduced.

The above object of the present invention can be achieved by an apparatus for recording information on an information recording medium. The apparatus is provided with: an information recording device for recording information on the information recording medium; an error detecting device for detecting a presence or absence of an error to indicate that the information can not be recorded correctly by the information recording device; and a record control device for controlling the information recording device such that the information recording device records information again at a present recording position when the error is present, and for controlling the information recording device such that the information recording device records information at a next reading position without recording information again at said present recording position when the error is present at each of consecutive recording positions.

According to the apparatus for recording information, the information recording device records information on the information recording medium. Then the error detecting device detects a presence or absence of an error to indicate that the information can not be recorded correctly by the information recording device. When the error is present, the record control device controls the information recording device such that the information recording device records information again at a present recording position. When the error is present at each of consecutive recording positions, the record control device controls the information recording device such that the information recording device records information at a next reading position without recording information again at the present recording position.

Therefore ineffective retry operations are eliminated, so that partial failures of recording and interruption of recording brought on by overflow of a memory are reduced.

In another aspect of the apparatus for recording information of the present invention, a memory device for memorizing information to indicate the presence or absence of the error, and the record control device controls the memory device such that the memory device memorizes at least information to indicate the presence or absence of the error at a former recording position.

According to this aspect, since memory device memorizes at least information to indicate the presence or absence of the error at a former recording position, the error which occurred at each of consecutive recording positions is definitely detected. Therefore the information recording device reads information at a next recording position without recording information again at the present recording position. Accordingly ineffective retry operations are eliminated, so that partial failures of recording and interruption of recording brought on by overflow of a memory are reduced.

In another aspect of the apparatus for recording information of the present invention, the memory device memorizes information to indicate the presence or absence of the error. The read control device controls the memory device such that the memory device memorizes information to indicate the absence of the error at a former recording position when at least the error is absent at a former recording position.

According to this aspect, since the memory device memorizes information to indicate the absence of the error at a former recording position when at least the error is absent at a former recording position. When the error is absent at a former recording position, retry operations is not executed. Further, when the error is present at each of consecutive recording positions, the information recording device records information at a next recording position without recording information again at the present recording position. Accordingly ineffective retry operations are eliminated, so that partial failures of recording and interruption of recording brought on by overflow of a memory are reduced.

The above object of the present invention can be achieved by a reproducing information method of reproducing information recorded on an information recording medium. the reproducing information method is provided with: an information reading process of reading information recorded on the information recording medium; an error detecting process of detecting a presence or absence of an error to indicate that the information can not be read correctly; and wherein the information reading process reads information again at a present reading position when the error is present, and reads information at a next reading position without reading information again at the present reading position when the error is present at each of consecutive reading positions.

According to the method of reproducing information, the information reading process reads information recorded on the information recording medium. Then the error detecting process detects a presence or absence of an error to indicate that the information can not be read correctly. When the error is present, the information reading process reads information again at a present reading position. However, when the error is present at each of consecutive reading positions, the information reading process reads information at a next reading position without reading information again at the present reading position.

Therefore ineffective retry operations are eliminated, so that interruption of reproduction brought on by empty of remaining amount of a memory is reduced.

In one aspect of the method of reproducing information of the present invention, a memorizing process memorizes at least information to indicate the presence or absence of the error at a former reading position.

According to this aspect, since memory device memorizes at least information to indicate the presence or absence of the error at a former reading position, the error which occurred at each of consecutive reading positions is definitely detected. Therefore the information recording process reads information at a next reading position without reading information again at the present reading position. Accordingly ineffective retry operations are eliminated, so that interruption of reproduction brought on by empty of remaining amount of a memory is reduced.

In another aspect of the method of reproducing information of the present invention, a memory process memorizes information to indicate the presence or absence of the error. The memory process memorizes information to indicate the absence of the error at a former reading position when at least the error is absent at a former reading position.

According to this aspect, since the memory process memorizes information to indicate the absence of the error at a former reading position when at least the error is absent at a former reading position. When the error is absent at a former reading position, retry operations is not executed. Further, when the error is present at each of consecutive reading positions, the information reading process reads information at a next reading position without reading information again at the present reading position. Accordingly ineffective retry operations are eliminated, so that interruption of reproduction brought on by empty of remaining amount of a memory is reduced.

The above object of the present invention can be achieved by a recording information method of recording information on an information recording medium. The recording information method is provided with: an information recording process of recording information on the information recording medium; an error detecting process of detecting a presence or absence of an error to indicate that the information can not be recorded correctly; and wherein the information recording process records information again at a present recording position when the error is present, and records information at a next reading position without recording information again at said present recording position when the error is present at each of consecutive recording positions.

According to the apparatus for recording information, the information recording device records information on the information recording medium. Then the error detecting device detects a presence or absence of an error to indicate that the information can not be recorded correctly by the information recording device. When the error is present, the record control device controls the information recording device such that the information recording device records information again at a present recording position. When the error is present at each of consecutive recording positions, the record control device controls the information recording device such that the information recording device records information at a next reading position without recording information again at the present recording position.

Therefore ineffective retry operations are eliminated, so that partial failures of recording and interruption of recording brought on by overflow of a memory are reduced.

In another aspect of the apparatus for recording information of the present invention, a memory device for memorizing information to indicate the presence or absence of the error, and the record control process memorizes at least information to indicate the presence or absence of the error at a former recording position.

According to this aspect, since memory process memorizes at least information to indicate the presence or absence of the error at a former recording position, the error which occurred at each of consecutive recording positions is definitely detected. Therefore the information recording process reads information at a next recording position without recording information again at the present recording position. Accordingly ineffective retry operations are eliminated, so that partial failures of recording and interruption of recording brought on by overflow of a memory are reduced.

In another aspect of the method of recording information of the present invention, the memory process memorizes information to indicate the presence or absence of the error. The memory process memorizes information to indicate the absence of the error at a former recording position when at least the error is absent at a former recording position.

According to this aspect, since the memory device memorizes information to indicate the absence of the error at a former recording position when at least the error is absent at a former recording position. When the error is absent at a former recording position, retry operations is not executed. Further, when the error is present at each of consecutive recording positions, the information recording process records information at a next recording position without recording information again at the present recording position. Accordingly ineffective retry operations are eliminated, so that partial failures of recording and interruption of recording brought on by overflow of a memory are reduced.

### BRIEF DESCRIPTION OF THE DRAWINGS

FIG. 1 is a block diagram showing outline construction of an MD recording/reproducing apparatus as an embodiment of the present invention;
FIG. 2A is a view for showing outline construction of a recordable MD;
FIG. 2B is a view for showing outline construction of an information recording area outline construction of a recordable MD;
FIG. 3 is a view for showing a data structure of MD in the embodiment;
FIG. 4 is a view for explaining showing fundamental principle of shock proof in the embodiment;
FIG. 5 is a view for explaining intermittent reading operation in the embodiment;
FIG. 6 is a flow diagram of reading control process in the embodiment;
FIG. 7 is a timing chart of reading control process in the embodiment;
FIG. 8 is a flow diagram of recording control process in the embodiment; and
FIG. 9 is a timing chart of recording control process in the embodiment.

### DETAILED DESCRIPTION OF THE PREFERRED EMBODIMENTS

Referring to the accompanying drawings, embodiments of the present invention will be now explained. In the following explanation, the present invention is adapted for MD recording/reproducing device performing not only reproducing information but also reproducing information.

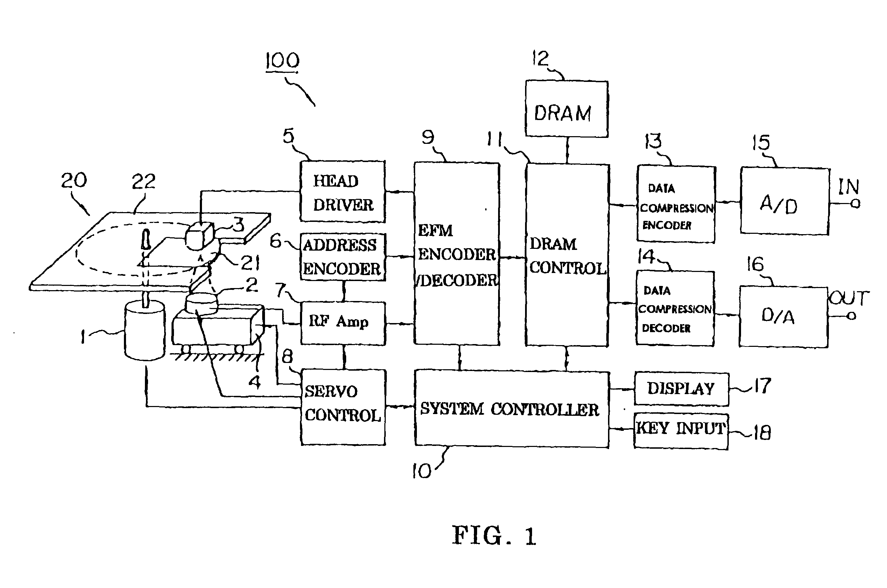

An embodiment of an MD recording/reproducing device of the present invention is explained with FIG. 1.

### [1] Outline Construction of MD recording/reproducing device

In FIG. 1, an MD 20 as an information recording medium consists of an optical disk body 21 and a cartridge 22 which protects the optical disk body 21. In this embodiment, the MD 20 is a recordable MD for recording/reproducing such as a Magneto-Optical disk (MO).

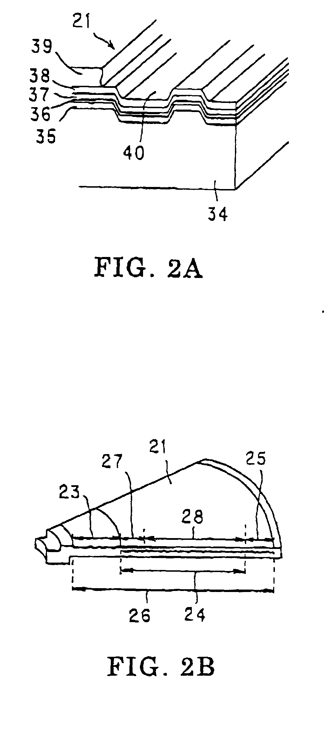

As shown in FIG. 2A, the optical disk body 21 includes a dielectric membrane 35, an MO (Magneto-Optical disk) membrane 36, a dielectric membrane 37, a reflecting membrane 38 and a protecting membrane 39 on a substrate 34 constructed from poly-carbonate, having a guide groove 40 called pre-groove. The guide groove 40 has walls at both sides which are wobbled with an FM modulated frequency according to address information.

An area of the MD in which some information is recorded is called information area. As shown in FIG. 2B, information area 26 of the MD 20 consists of a lead-in area 23 in which information of disc and the like are recorded, a recordable area 24 in which information of music and index are available to be recorded, and a lead-out area 25. The recordable area 24 consists of a UTOC area 27 in which a UTOC (User Table Of Contents) including index information is recorded and a program area 28 in which information of music and the like are recorded. The above-mentioned guide groove 40 is formed throughout the recordable area 24 so that the address information is available to be read out from the MD 20 even if it is a blank MD in which nothing is recorded. Further, a position of a pick up is identified by reading the address information.

As shown in FIG. 1, a MD recording/reproducing device 100 in which the above-mentioned MD 20 is available to be inserted and ejected, includes a spindle motor 1, undescribed actuator, an optical pick up 2, and an RF (Radio Frequency) amplifier 7. The spindle motor 1 is a motor which rotates the optical disc body 21 of MD 20 and is controlled to rotate the optical disc body 21 at a constant linear speed. The optical pick up 2 irradiates a laser beam to the optical disc body 21 which is rotated by the spindle motor 1 and outputs RF signals corresponding to reflected light of the laser beam.

In a recordable MD, digital signals "1" and "0" are converted to magnetic polarities "N" and "S", which are recorded on a recording surface of the recordable MD. When the optical pick up 2 irradiates a laser beam onto the recording surface, Kerr effect is generated on a magnetic membrane of the recording surface. The plane of polarization of reflecting light slightly rotates counterclockwise or clockwise in accordance with the magnetic polarities "N" and "S". The optical pick up 2 includes two photoreceptor devices. When the reflecting light passes through a polarization beam splitter, the amount of split to the two photoreceptor devices varies with the planes of polarization rotating in accordance with the magnetic polarity "N" or "S". Therefore digital signal "1" or "0" is available to read by obtaining the difference of output between the two photoreceptor devices in the RF amplifier 7.

The MD recording/reproducing device 100 includes an address decoder 6, an EFM encoder/decoder 9, a magnetic head 3, and a drive circuit for head 5.

The address decoder 6 reads address information by detecting a wobbling frequency out of an RF signal. The address decoder 6 enables reading of address in unrecorded area of the optical disc body 21 and detecting the position of the optical pick up 2.

The EFM encoder/decoder 9 has both functions of an EFM (Eight to Fourteen Modulation) encoder and an EFM decoder. At the time of recording information, an EFM encoder/decoder 9 works as the EFM encoder and modulates a signal to be recorded with an EFM signal. However, in the recordable MD magnetic modulation scheme is adopted against optical modulation which is adopted in a CD-R and the like. Therefore the modulated signal is provided to the head drive circuit 5. On the other hand, at the time of reproducing information the EFM encoder/decoder 9 works as the EFM decoder and extracting an EFM signal from an RF signal amplified by the RF amplifier 7 to demodulate it.

The EFM encoder/decoder 9 also includes an ACIRC (Advanced Cross Interleaved Read-Solomon Code) encoder/decoder which has both functions of error correcting encoding/decoding by ACIRC scheme. The ACIRC encoder adds error correcting code to recorded data. The ACIRC decoder applies error correcting to the data which is read by the optical pick up 2 and EFM decoded, and outputs the data to a DRAM controller circuit 11. At that time the ACIRC decoder outputs information which indicates whether the data includes error to system controller 10. That is, in case of reproduction the ACIRC decoder of the EFM encoder/decoder 9 has a function of an error detecting means.

The head driver circuit 5 drives a magnetic head 3 on the basis of recording signal EFM modulated. Once laser beam is irradiate to a spot on magnetic membrane of the MD 20 by the optical pick up 2, the spot is heated to more than Curie point. Then the magnetic head 3 magnetizes the spot in the magnetic orientation on the basis of EFM modulated recording signal.

As mentioned above, the MD recording/reproducing device 100 writes information to the recordable MD in magnetic modulation. In case of using optical modulation, pits are formed on a recording medium by a laser beam irradiation. One portion of the pits which are initially irradiated becomes small, however, the other portion which is latterly irradiated becomes large. Therefore the pits are likely to be formed in tear-drop shape. This often results in cause of jitter given at the reading a signal. On the other hand, in using magnetic modulation, a laser diode just keeps on irradiating at a constant power, so that a symmetric pattern in which N pole and S pole get lined up consecutively is formed. This has an important advantage of being highly resistant to a tilt of a disc.

The MD recording/reproducing device 100 includes a DRAM 12, a DRAM control circuit 11, an A/D converter 15, a data compression encoder 13, a data compression decoder 14, and a D/A converter 16.

The DRAM 12 is temporary memory storing information data whose amount is about 1 M bit during reproduction and record. The DRAM 12 is used for prevention of interruption of reproduction which is happened because of shock and the like. This is called shock-proof memory.

The DRAM control circuit 11 controls input/output of data from/to the DRAM 12 by outputting a predetermined control signal to the DRAM 12. During reproduction, the DRAM control circuit 11 input decoded data from the EFM encoder/decoder 9 and write it to the DRAM 12. Further, as necessary, the DRAM control circuit 11 outputs the data to the data compression encoder (ATRAC encoder) 13. During record, the DRAM control circuit 11 writes the data inputted from the data compression decoder (ATRAC decoder) 14 to the DRAM 12, and as necessary, outputs it to the EFM encoder/decoder 9. The system controller 10 controls the DRAM control circuit 11 in timing with reading data out of the optical disc body 21 and writing it to the optical disc body 21. The system controller 10 monitors a free space of the DRAM 12 and the amount of stored data in the DRAM 12 through the DRAM control circuit 11. If the free space goes out of the DRAM 12 during reproduction, the system controller 10 temporarily suspends data-reading out of the optical disc body 21. Then if the free space increases up to more than a predetermined amount, the system controller 10 restarts the data-reading. If the amount of stored data is more than a predetermined level during recording, the system controller 10 writes data to the optical disc 21. If the amount of stored data is less than a predetermined level, the system controller 10 suspends data-writing to the optical disc 21.

The A/D converter 15 converts an analog information signal inputted out of an external during recording into a digital signal. In this embodiment a sampling frequency of 44.1 kHz is used for the A/D converter 15.

The data compression encoder 13 compresses data by using an ATRAC (Adaptive Transform Acoustic Coding) system. In the ATRAC system the amount of data is reduced down to one-fifth of the original information amount. In the ATRAC system the amount of converted digital signal is compressed by using threshold of hearing characteristics of human being's ear and masking characteristics of hearing without thinning out data simply.

The data compression decoder 14 decompresses the data, which is read out of the optical disc body 21 and EFM modulated during reproduction, by reversing the procedure of compression in the ATRAC system, and outputted a digital audio signal.

The D/A converter 16 converts a decoded digital audio signal into an analog signal.

MD recording/reproducing device 100 includes a carriage 4, the spindle motor 1, a servo-control circuit 8 and the system controller 10. The carriage 4 moves the optical pick up 2 and the magnetic head 3 to the direction of the radius of the optical disc body 21. The magnetic head 3 is attached to the optical pick up 2 through an arm. The magnetic head 3 and the optical pick up 2 face each other through the optical disc 21 and move together. In this manner it is available to set up the magnetic head 3 and the optical pick up 2 in the position opposed to a requested address on the optical disc 21. It is also available to read and write data in the position with reliability.

The spindle motor 1 rotates the optical disc body 21 at a constant velocity. The spindle motor 1 is controlled by the servo-control circuit 8.

The servo-control circuit 8 controls the carriage 4, the spindle motor 1, and undescribed actuator by using servo system. The servo-control circuit 8 receives an RF signal from the RF amplifier 7, and extracts a control signal from the RF signal, and sends the control signal to control the carriage 4 and the undescribed actuator. In this manner the servo-control circuit 8 accomplishes tracking-servo operation to keep a spot of a laser beam on the recording track line of the optical disc body 21. Further, the servo-control circuit 8 extracts a control signal from the RF signal, and sends the control signal to control the undescribed actuator. In this manner the servo-control circuit 8 accomplishes focusing-servo operation to keep irradiation of a laser beam on the focusing position of the optical disc body 21. Moreover, the servo-control circuit 8 sends the control signal on the basis of a clock signal included in an EFM signal from the EFM encoder/decoder 9 to rotate the spindle motor 1 at a constant velocity. In this manner the servo-control circuit 8 accomplishes spindle-servo operation.

The system controller 10 is a main controller of the MD recording/reproducing device 100. Every command to the system controller 10 for operation is given by key input device 18. The system controller 10 sends control signals to devices in the MD recording/reproducing device 100 on the basis of the commands outputted from the key input device 18, and let the devices accomplish fast-search operation or random access reproduction and the like. The operation status of the MD recording/reproducing device 100 is displayed on the display 17.

### [2] Recording/Reproducing System of the MD recording/reproducing device

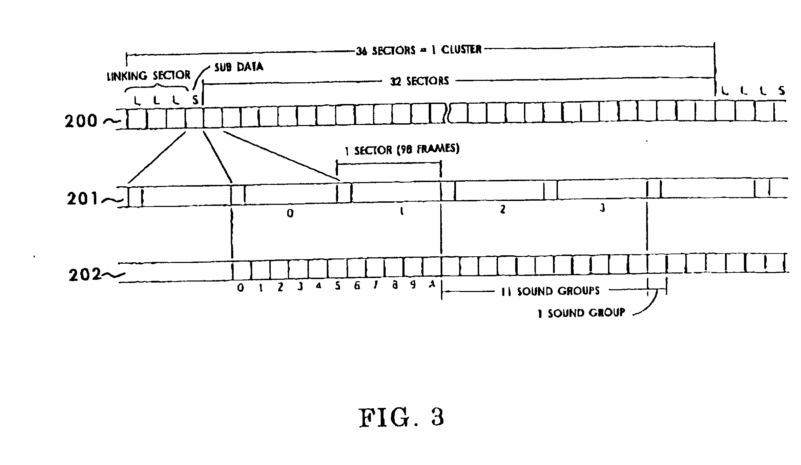

Referring to Fig. 3, structure of data applied in the MD will be now explained. In the recordable MD, the CD-ROM standard is adopted for data format. As shown in diagram 201 of FIG. 3, one sector comprises of 98 frames. As shown in diagram 202 of FIG. 3, in the MD, a sound group is defined as minimum unit of compression data. As shown in diagram 202 of FIG. 3 one sector is divided into 5.5 sound groups (Two sectors are divided into 11 sound groups). As shown in diagram 200 of FIG. 3 one cluster comprises of 36 sectors in total, which is divided into 32 sectors, linking area of 3 sectors, and sub code of 1 sector. The one cluster is the minimum unit of recording. Reading is accomplished every one sector.

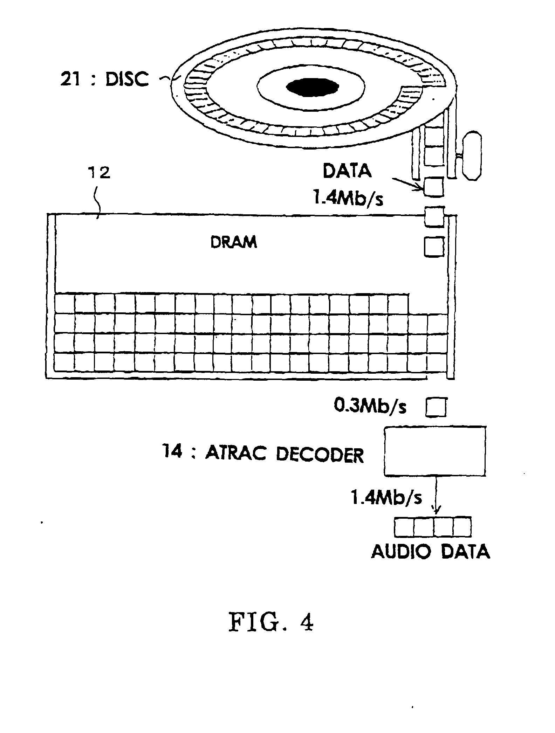

In the MD recording/reproducing device 100 the information recorded on the optical disc body 21 is read out at a data transmission rate of 1.4 Mb/s, and recorded on the DRAM 12, as shown in FIG. 4. However, the information is compressed down to one-fifth of the original information amount at the time of recording by the data compression decoder (ATRAC decoder) 14. If the amount of data read out at about 0.3 Mb/s, which corresponds to one-fifth of the data read out at about 1.4 Mb/s, is obtained, it is available to reproduce musical signals. Therefore reading of information from the DRAM 12 is accomplished at 0.3 Mb/s, Since there is difference between a data transmission rate for writing to the DRAM 12 and reading from the DRAM 12, it is available to temporarily store information read from the optical disc in the DRAM 12, and sequentially read the stored information to reproduce. For example, in case that the capacity of the DRAM 12 is 1 Mbit, it is available to store information, whose amount is the equivalent of about 3 seconds on reproduction time basis, in the DRAM 12. Therefore if a spot of laser beam goes off position on a track because of movement of the optical pick up 2 by given vibration, it is possible to prevent the interruption of reproduction by putting the spot on the track during reproducing stored signals. In this manner shock proof mechanism is configured.

However if there is difference between transmission rate of writing information to the DRAM 12 and reading information from the DRAM 12, an overflow occurs in the DRAM 12 by reading information continuously from the optical disc body 21. For example, in case that the capacity of the DRAM 12 is 1 Mbit, the DRAM 12 becomes full at 0.9 second.

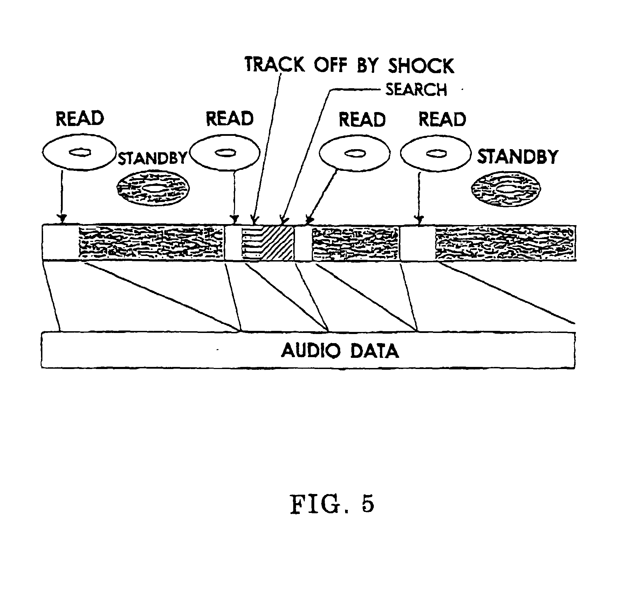

Consequently, in the MD recording/reproducing device 100, as shown in FIG. 5, after reading information from the DRAM 21 in a certain period, the amount of information stored in the DRAM 12 is controlled by suspending the reading in a predetermined period. The amount of reading and the period of suspending are out of standardization, therefore it is possible to design them as appropriate in accordance with capacity of a memory and the like. That is, in the MD recording/reproducing device 100 intermittent reading is executed. Further, as shown in FIG. 5, in case that the spot goes off the position on the track because of disturbance in suspending period, desired track is immediately searched by using address information. Then if the spot is put on the track, the reading restarts.

Moreover, in case that an error is detected by the ACIRC decoder during reading, re-reading (retry) is executed at a predetermined number of times except for predetermined cases.

During recording, as in the case of reading, the information to be recorded is converted into digital output at a sampling frequency of 44.1 kHz and with 16 bits for quantization. Then the information is compressed up to one-fifth of the original information amount, and temporarily stored in shock proof memory at about 300 kb/s. Further, the data read out of the memory at a data transmission rate of 1.4 Mb/s is recorded in the disc rotating at more than four times rate of data transmission. Therefore, even in recording, after recording data in the DRAM 21 in a certain period, the recording is suspended until next data is stored in the DRAM 12. At the time of storing the prescribed amount of data, the next recording restarts. That is, in the MD recording/reproducing device 100 intermittent recording is executed.

Further, in case of correct operation with no vibration, consecutive recording is executed in every cluster. During recording, address information and the like of MD are always monitored, if the optical pick up 2 and the magnetic head 3 go off the recording track and the like, and under the prescribed condition, the recording is immediately suspended and re-recording (retry ) is executed from head of the cluster again. Therefore the data of more than one cluster is stored in the DRAM 12 at lowest.

As shown in FIG. 2A, 2B, the MD is provided with a lead- in area at its most inner circumferential portion. At the lead-in area the TOC (Table Of Contents) is previously recorded by using pits.

The TOC of the recordable MD includes information about the power of laser which is necessary for recording, a recordable area, the address of UTOC (User Table Of Contents) and the like. As shown in FIG. 2B, a UTOC is recorded at UTOC area 27 which is in recordable area, and includes the index information.

### [3] Reading Control Processing

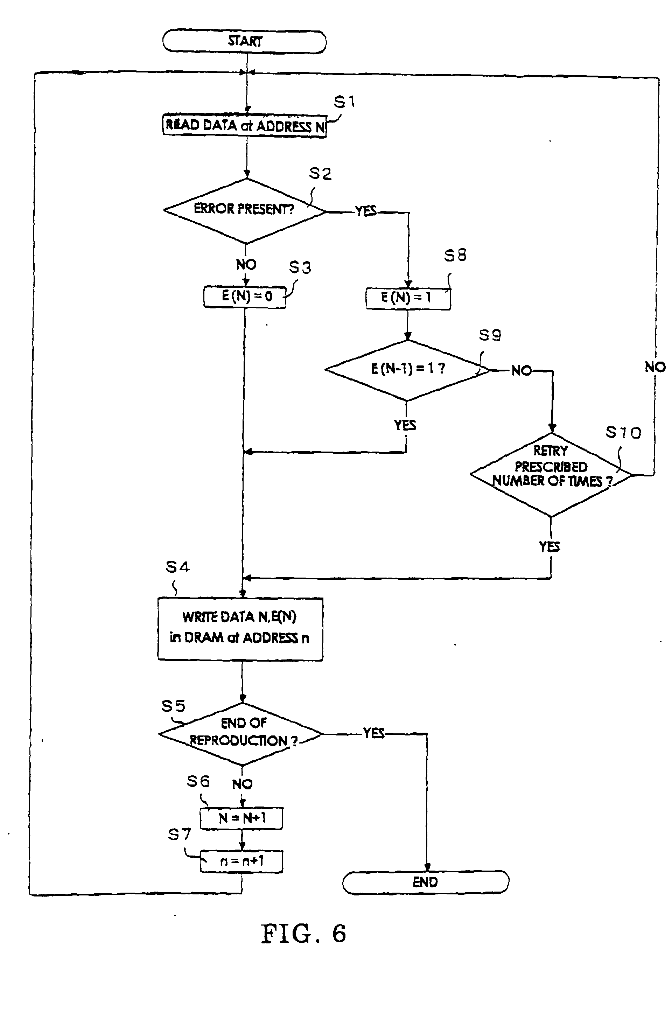

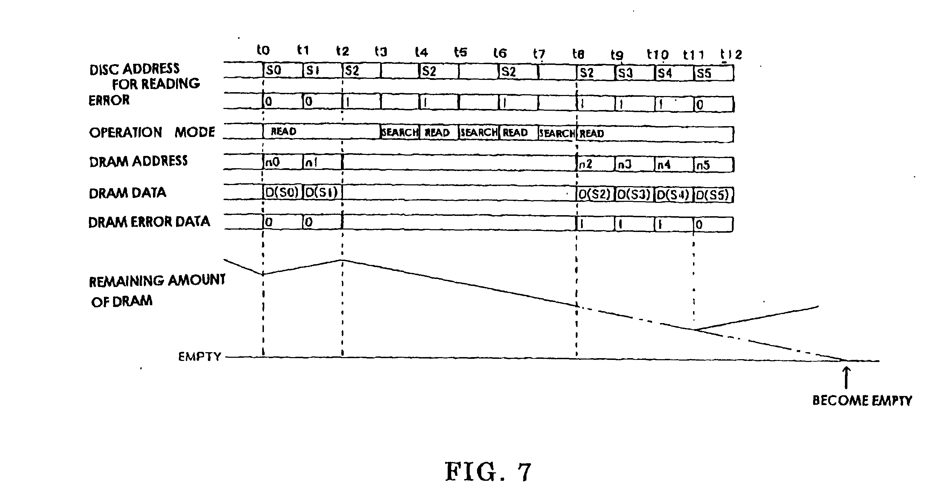

Referring to Fig. 6, 7 reading control processing in the MD recording/reproducing device 100 will be now explained.

At the time of reproducing data recorded in the optical disc 21, the optical pick up 2 reads the data at address N and outputs the data to the RF amplifier 7. The RF amplifier 7 amplifies the data and shapes waveform of the data into waveform of digital signal and outputs the data having the waveform to the EFM encoder/decoder 9.

In the EFM encoder/decoder 9, the EFM decoder decodes the data in EFM decode scheme. Further the ACIRC decoder performs error-correction and outputs the data. In embodiment as shown in FIG. 7 the ACIRC decoder outputs data D (S0) recorded at address S0. FIG. 7 is a time chart indicates reading operation as mentioned above.

Then ACIRC decoder determines if the data D (S0) includes error, and outputs the information of the result of the determination to system controller 10 (FIG. 6; Step S2).
In case that the data D (S0) does not include any error (FIG. 6; Step 2 : NO ), the system controller 10 resets error information flag E (N) (FIG. 6, Step S3). In the embodiment as shown in FIG. 7 error information flag E (S0) corresponding to the address S0 is reseted to zero.

Further, in this embodiment, the error information flag is stored in recording are of the DRAM 12. However the error information flag can be stored in a memory of system controller. In explanation of flow diagram and in the flow diagram, "N" in parenthesis as described "flag E (N)" indicates the number of address.

Then system controller 10 writes the value of the data and the error information flag E (N) at address "n" in the DRAM 12 through the DRAM control circuit 11 (FIG. 6, Step S4). In embodiment as shown in FIG. 7, the data D (S0) and the values 0 of the error information flag E (S0) are written in the DRAM 12 at address n0. The data written in the DRAM 12 at address n0 is read at the prescribed data transmission rate, and decompressed up to five times amount by the data compression encoder 13, and reproduced as analog signals by the converter 15.

At this time, the system controller 10 monitors remaining amount of data in the DRAM 12. If the remaining amount increases more than a prescribed amount, i.e., the free space of the the DRAM 12 declines less than a prescribed amount, reading operation is temporarily suspended.

Then the system controller 10 determines if a whole data has been reproduced (step S5), and increments address N in the optical disc 21 (step S6), and increments address n in the DRAM 12 (step S7), and reads the data written in the DRAM 12 at the next address (step S1). In embodiment as shown in FIG. 7, the next address becomes S1, and the address in the DRAM 12 becomes n1.

Then the above-mentioned processing is repeated, in embodiment as shown in FIG. 7, the data D (S1) and the values 0 of the error information flag E (S1) are written in the DRAM 12 at address n1. Further the above-mentioned processing is repeated, the next address becomes S2, and the address in the DRAM 12 becomes n2.

At the time t2 as shown in FIG. 7, the data written in the DRAM 12 at address S2 is read (FIG. 6, Step S1), then if the data includes error (FIG. 6, Step S2; YES), the error information flag E (N) is set to 1 (FIG. 6, Step S8). In the embodiment as shown in FIG. 7, the error information flag E (S2) is set to 1.

Then the system controller 10 determined if the value of error information flag E (N-1), which is stored in the DRAM 12 as an error information flag corresponding to former address, i.e., address N-1, is 0 or 1 (FIG. 6, Step S9). In case as shown in FIG. 7, the error information flag E (S1) corresponding to former address S1 is 0, so that error status is determined as 'no error' (FIG. 6, Step S9; NO). Then a retry operation for re-reading is performed.

FIG. 7 indicates that the retry operation (re-reading) was performed three times, at time t4, t6, t8. However, the number of times of the retry operation is not limited to third times, it can be accordingly changed.

If error status is determined as 'no error' during the retry operation (FIG. 6, Step S10; NO-Step S1-Step S2; NO), as is the case with the above-mentioned, the error information flag E (N) is reset to 0, and the data and the values 0 of the error information flag are written in the DRAM 12 (Step S3.Step S4). However, if data includes errors at any time of the retry operation for three times (FIG. 6, Step S10; YES), the data D (S2) and the value 1 of the error information flag E (S2) are written in the DRAM 12 at address n2 (FIG. 6, Step S4).

Instead of that manner, the value 0 may be written in the DRAM as the value of the data D (S2), because at that time the data D (S2) includes error. Moreover, the value of the data D (S2) includes error may be written as it is, then at the reproducing, output may be muted.

Then, the address of the optical disc is incremented (Step S6), and the address of the DRAM 12 is also incremented (Step S7), so that the address of the optical disc becomes S3 and the address of the DRAM 12 becomes n3. Then, at time t9 as shown in FIG. 7, the data recorded in the optical disc at the address S3 is read (FIG. 6, Step S1). At this time, if the data D (S3) includes error (Step S2; YES), the error information flag E (N = S3) is set to the value 1 (Step S8). Then the system controller 10 determines if the value of the information error flag E (S2) corresponding to the address S2 which is the former address stored in the DRAM 12, is "0 " or "1" (Step S9).

As a result, in case as shown in FIG. 7, the error information flag E (S2) is determined as '1' (Step S9; YES). Accordingly, the errors detected at the present address S3 and the former address S2 are identified as consecutive errors which are occurred in the consecutive addresses, S3 and S2. Therefore, the retry operation is not performed, and the data include the error and the values of the error information flag are written in the DRAM 12. Then the next address is read. In case as shown in FIG. 7, without performing the retry operation, the data D (S3) is written in the DRAM 12 at the address n3 (Step S4).

### When the next address S4 is read (Step S1), in case as shown

FIG. 7, a error is identified in the data D (S4) recorded at the address S4 (Step S2; YES). As a result, the error information flag E (S4) is set to the value 1 (Step S8), and the error information flag E (S3) is determined if its value is "1" or "0" (Step S9). Accordingly, the value of the error information flag E (S3) is identified as "1" (Step S9; YES), as is the case with the address 82, without performing the rertry operation, the data D (S4) and the value of the error information flag E (S4) are written in the DRAM 12 at the address n4. Then the next address is read.

When the next address S5 is read (Step S1), no error is identified in the data D (S5) recorded at the address S5 (Step S2; NO). As a result, the error information flag E (S5) is reset to the value 0 (Step S3), and the data D (S5) and the value of the error information flag E (S5) are written in the DRAM 12 at the address n5. Then the next address is read. If reading operation for all data is completed (Step S5; YES), reading control processing is terminated.

As mentioned above, according to this embodiment, in case that the errors are consecutively occurred at the consecutive record areas, which are the last area and the former area accessed just before, the data read at the last area and the value of the error information flag which is set or reset corresponding to the data are written in the DRAM. Then the reading operation of the next record area is performed.

There is a high probability that the errors which are consecutively occurred at the consecutive record areas have the same causes. If the retry operation is performed in that case, there is a high probability that the error will be occurred again. However, in this embodiment, ineffective retry operations are eliminated, so that interruption of reproduction brought on by empty of remaining amount of the DRAM 12 is reduced.

On the other hand, in a conventional device, the retry operations are performed even though the errors are consecutively occurred as shown in FIG. 7. Accordingly, interruption of reproduction brought on by empty of remaining amount of DRAM is occurred as shown by chain double-dashed line in FIG. 7.

### [4] Recording Controlling Processing

As mentioned above, the device having the constitution of this embodiment have the superior effect of reducing interruption of reproduction as compared to the conventional device.

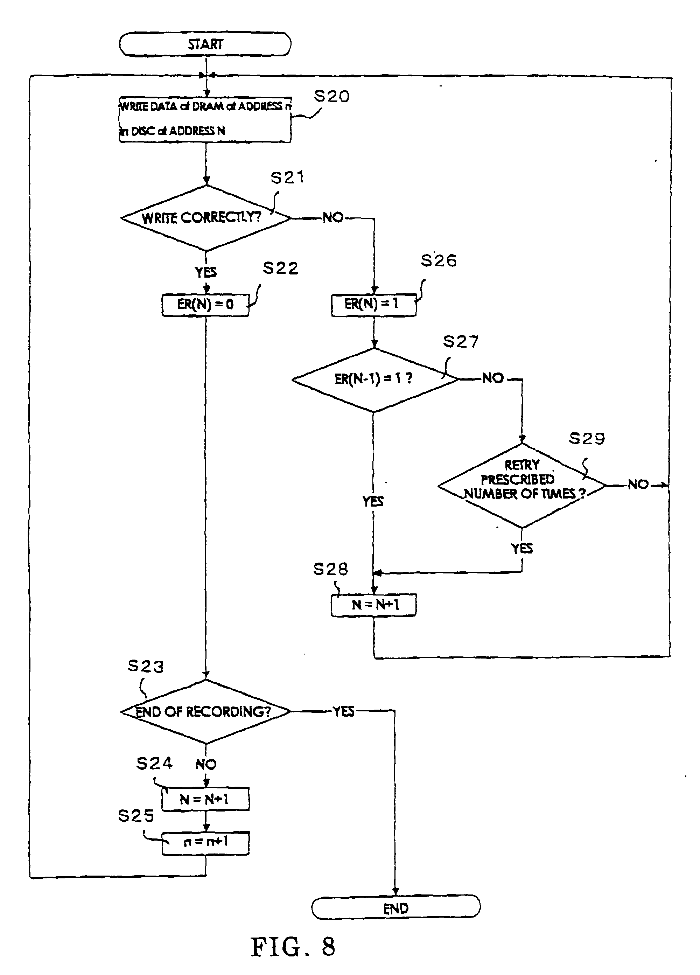

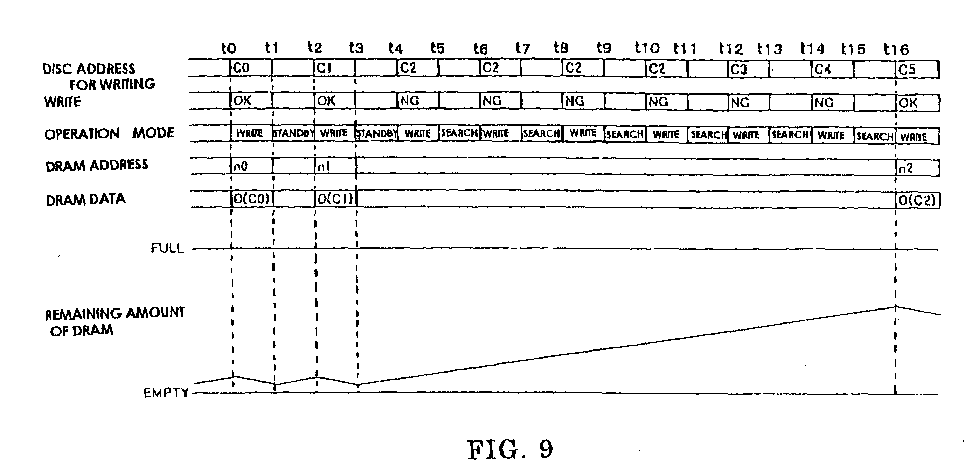

Referring to Fig. 8, 9 recording control processing in the MD recording/reproducing device 100 will be now explained.

At the time of recording data in the optical disc 21, the system controller 10 moves the optical pick up 2 and the magnetic head 3 to record area at address N. Then the system controller 10 reads the data written in the DRAM 12 at address n and record the data in the record area at address N (FIG. 8; Step S20). In case as shown in FIG. 9, the data D (C0) written in DRAM 12 at address n0 is recorded in the record area in the optical disc 21 at address C0.

Then the system controller 10 determines if this recording is correctly performed (Step S21). This determination is accomplished by detecting a defect on the basis of an RF signal, or verifying if the recorded data in the optical disc 21 matches the written data in the DRAM 12.

In case that this recording is correctly performed (Step 21; YES), the system controller 10 resets error information flag ER (N) as the value 0 (Step S22). Then the system controller 10 determines if the recording operation is completed for all data (Step S23). In case that it is not completed (Step S23; NO), the address N is incremented (Step S24) and the address n is incremented (Step S25) in order to prepare for the recording at the next address. In case as shown in FIG. 9, the address of the optical disc 21 becomes C1 and the address of the DRAM 12 becomes n1.

The system controller 10 monitors remaining amount of data in the DRAM 12. In case that the remaining amount is reduced by the recording operation, the system controller 10 suspends the recording operation and holds it until the remaining amount becomes more than a prescribed amount, i.e., the amount corresponding to one cluster.

In case as shown in FIG, 9, at time t2, the data whose amount is more than one cluster is stored in the DRAM 12, so that the system controller 10 reads the next data written in the DRAM 12 at the next address n+1, and records the next data in record area in the optical disc 21 at the address N+1 (Step S20). That is, the data D (C1) written in the DRAM 12 at the address n1 is recorded in the record area in the optical disc 21 at the address C1.

In case that this recording is correctly performed (Step 21; YES), the system controller 10 resets error information flag ER (N = C1) as the value 0 (Step S22). Then the system controller 10 determines if the recording operation is completed for all data (Step S23). In case that it is not completed (Step S23; NO), the address N is incremented (Step S24) and the address n is incremented (Step S25), the system controller 10 suspends the recording operation and holds it until the remaining amount of data in the DRAM 12 becomes more than the amount corresponding to one cluster. In case as shown in FIG. 9, the address of the optical disc 21 becomes C2 and the address of the DRAM 12 becomes n2.

When the data whose amount is more than one cluster is stored in the DRAM 12, the system controller 10 reads the next data written in DRAM 12 at the next address n2, and records the next data in record area in the optical disc 21 at the address C2 (Step S20). However, if this recording is incorrectly performed (Step 21; NO), the system controller 10 sets the error information flag ER (N = C2) as the value 1 (Step S26) and determines if the value of error information flag E (N-1 = C1), which is stored in the DRAM 12 as the error information flag corresponding to former address N-1, is 0 or 1 (Step S27). In case as shown in FIG. 9, the error information flag ER (C1) corresponding to former address C1 is 0, so that the retry operation (re-recording) is performed by a prescribed number of times. FIG. 9 indicates that the retry operation is performed three times, at time t6, t8, t10. However, the number of times of the retry operation is not limited to third times, it can be accordingly changed.

If the recording on the basis of this retry operation is not normally performed (Step S29; YES), the system controller 10 suspends the recording at the address and increments the address (Step S28). Then the system controller 10 records the data in the record area at the next address (Step S20). In FIG. 9, the data is recorded in the record area at the address C3.

However, in case this recording at the address C3 is incorrectly performed (Step 21; NO), the system controller 10 sets the error information flag ER (N = C3) as the value 1 (Step S26) and determines if the value of the error information flag E (N = C2), which is stored in the DRAM 12 as former error information flag corresponding to former address C2, is 0 or 1 (Step S27).

In FIG. 9, the error information flag ER (C2) corresponding to former address C2 is 1 (Step S27; YES). That means the errors in the recording at the present address C3 and the former address C2 are consecutively occurred at the consecutive area whose addresses are C2 and C3. Consequently, the retry operation (re-recording) is not performed (Step S29; YES), the system controller 10 suspends the recording at the address C3 and increments the address (Step S28).

Further, at time t14, the data is recorded in the record area at the address C4 (Step S20). However, this recording at the address C4 is incorrectly performed (Step 21; NO), so that the system controller 10 sets the error information flag ER (C4) as the value 1 (Step S26) and determines if the value of the error information flag E (C3), which is stored in the DRAM 12 as former error information flag corresponding to former address C3, is 0 or 1 (Step S27). As a result, the value of the error information flag E (C3) is found as 1 (Step S27; YES). Consequently, as is the case with address C3, the retry operation is not performed, the system controller 10 suspends the recording at the address C4 and increments the address (Step S28). Then, at time t16, the recording is performed in the recording area at address C5 (Step S20). In this case the data D (C2) is correctly recorded in the optical disc 21 at address C5 (Step S21; YES). Therefore the system controller 10 resets error information flag ER (C5) as the value 0 (Step S22). Then the system controller 10 determines if the recording operation is completed for all data (Step S23). If it is not completed (Step S23; NO), the address N is incremented (Step S24) and the address n is incremented (Step S25). However, if it is completed (Step S24; YES), the recording control processing is accomplished.

As mentioned above, according to this embodiment, in case that the data is incorrectly recorded in the consecutive record areas, without the retry operation is not performed, the error information flag is set to the value 1 and the recording in next area at next address is performed.

There is a high probability that the errors which are consecutively occurred at the consecutive record areas have the same causes. If the retry operation is performed in that case, there is a high probability that the recording will be correctly performed again. However, in this embodiment, ineffective retry operations are eliminated, so that partial failures of recording and interruption of recording brought on by overflow of DRAM 12 are reduced.

On the other hand, in a conventional device, the retry operations are performed even though the data is incorrectly recorded in the consecutive record areas. Accordingly, the recording in DRAM is performed for the period more than that as shown in FIG. 9 from time t3 to time t16. At last, overflow of the DRAM 12 is occurred, so that the recording is partially failed.

As mentioned above, the device having the constitution of this embodiment have the superior effect of preventing failure of recording brought on by overflow of the DRAM 12 as compared to the conventional device.

Further, in the above-mentioned embodiment, the MD is used for a recording medium. However, this invention is not restricted to the embodiment. The invention can be adopted to the device having a memory like a shock proof memory and using the other recording medium, such as a CD (Compact Disc), a CD-R (Recordable CD), a CD-RW (Re-Writerable CD) and the like.

Moreover, the invention can be modified within the scope of its essential concept.

## Claims

1. An apparatus (100) for reproducing information recorded on an information recording medium (21), characterized in that said apparatus (100) comprises:
an information reading device (2) for reading information recorded on the information recording medium (21);
an error detecting device (10) for detecting a presence or absence of an error to indicate that the information can not be read correctly by the information reading device (2); and
a read control device (10) for controlling the information reading device (2) such that the information reading device (2) reads information again at a present reading position when the error is present, and for controlling the information reading device (2) such that the information reading device (2) reads information at a next reading position without reading information again at the present reading position when the error is present at each of consecutive reading positions.

2. An apparatus (100) according to claim 1, characterized in that said apparatus (100) further comprises a memory device (12) for memorizing information to indicate the presence or absence of the error, and
said read control device (10) controls the memory device (12) such that the memory device (12) memorizes at least information to indicate the presence or absence of the error at a former reading position.

3. An apparatus (100) according to claim 1, characterized in that said apparatus (100) further comprises a memory device (12) for memorizing information to indicate the presence or absence of the error, and
said read control device (10) controls the memory device (12) such that the memory device (12) memorizes information to indicate the absence of the error at a former reading position when at least the error is absent at a former reading position.

4. An apparatus (100) for recording information on an information recording medium (21) characterized in that said apparatus (100) comprises:
an information recording device (2,3) for recording information on the information recording medium (21);
an error detecting device (10) for detecting a presence or absence of an error to indicate that the information can not be recorded correctly by the information recording device (2,3); and
a record control device (10) for controlling the information recording device (2,3) such that the information recording device (2,3) records information again at a present recording position when the error is present, and for controlling the information recording device (2,3) such that the information recording device (2,3) records information at a next reading position without recording information again at said present recording position when the error is present at each of consecutive recording positions.

5. An apparatus (100) according to claim 4, characterized in that said apparatus (100) further comprises a memory device (12) for memorizing information to indicate the presence or absence of the error, and
said record control device (10) controls the memory device (12) such that memory device (12) memorizes at least information to indicate the presence or absence of the error at a former recording position.

6. An apparatus according to claim 4, characterized in that said apparatus (100) further comprises a memory device (12) for memorizing information to indicate the presence or absence of the error, and
said read control device (10) controls the memory device (12) such that memory device (12) memorizes information to indicate the absence of the error at a former recording position when at least the error is absent at a former recording position.

7. A reproducing information method of reproducing information recorded on an information recording medium (21) characterized in that the reproducing information method comprises:
an information reading process of reading information recorded on the information recording medium (21);
an error detecting process of detecting a presence or absence of an error to indicate that the information can not be read correctly; and
wherein the information reading process reads information again at a present reading position when the error is present, and reads information at a next reading position without reading information again at the present reading position when the error is present at each of consecutive reading positions.

8. A reproducing information method according to claim 7, characterized in that said reproducing information method comprises a memorizing process of memorizing at least information to indicate the presence or absence of the error at a former reading position.

9. A reproducing information method according to claim 7, characterized in that said reproducing information method comprises a memorizing process of memorizing information to indicate the absence of the error at a former reading position when at least the error is absent at a former reading position.

10. A recording information method of recording information on an information recording medium (21) characterized in that said recording information method comprises:
an information recording process of recording information on the information recording medium (21);
an error detecting process of detecting a presence or absence of an error to indicate that the information can not be recorded correctly; and
wherein the information recording process records information again at a present recording position when the error is present, and records information at a next reading position without recording information again at said present recording position when the error is present at each of consecutive recording positions.

11. A recording information method according to claim 10, characterized in that said recording information method comprises a memorizing process of memorizing at least information to indicate the presence or absence of the error at a former recording position.

12. A recording information method according to claim 10, characterized in that said recording information method comprises a memorizing process of memorizing information to indicate the absence of the error at a former recording position when at least the error is absent at a former recording position.
